# EUROPEAN PATENT SPECIFICATION

(11) **EP 4 490 539 B1**
(45) Date of publication and mention of the grant of the patent: **09.12.2026**
(21) Application number: 22711026.9
(22) Date of filing: 07.03.2022
(51) Int. Cl.: G01S 13/60, G01S 13/62, G01S 13/87, G01S 7/03, H01Q 1/32, H01Q 25/00, H01Q 21/08, H01Q 21/06, G01S 13/86, G01S 13/931, G01S 7/295, H01Q 3/26

(54) **RADAR SYSTEMS FOR DETERMINING VEHICLE SPEED OVER GROUND**
RADARSYSTEME ZUR BESTIMMUNG DER FAHRZEUGGESCHWINDIGKEIT ÜBER DEM BODEN
SYSTÈMES RADAR POUR LA DÉTERMINATION DE LA VITESSE D'UN VÉHICULE SUR LE SOL

(43) Date of publication of application: 15.01.2025
(73) Proprietor: VOLVO TRUCK CORPORATION, 405 08 Göteborg (SE)
(72) Inventor: RYDSTRÖM, Mats, 427 39 Billdal (SE); ARIKERE, Adithya, 412 75 Göteborg (SE); JONASSON, Mats, 433 49 Partille (SE)
(74) Representative: Ström & Gulliksson AB
(86) International application number: PCT/EP2022/055739
(87) International publication number: WO 2023/169652

(56) References cited:
- EP-A1- 3 375 694
- EP-A2- 0 095 300
- DE-A1- 19 720 846
- DE-T2- 3 885 397
- US-A- 3 363 253
- US-A- 4 845 506
- US-A1- 2004 138 802

## Description

### TECHNICAL FIELD

The present disclosure relates to methods and control units for ensuring safe and efficient vehicle motion management of a heavy-duty vehicle. The methods are particularly suitable for use with cargo transporting vehicles, such as trucks and semi-trailers. The invention can however also be applied in other types of heavy-duty vehicles, e.g., in construction equipment and in mining vehicles, as well as in cars.

### BACKGROUND

Heavy-duty vehicles have traditionally been controlled using torque request signals generated based on the position of an accelerator or brake pedal and sent to motion support devices (MSDs) such as service brakes and propulsion devices over digital interfaces. However, advantages may be obtained by instead controlling the actuators using wheel slip or wheel speed requests sent from a central vehicle controller to the different actuators. This moves the actuator control closer to the wheel end, and therefore allows for a reduced latency and a faster more accurate control of the MSDs. Wheel-slip based MSD control approaches are particularly suitable for use with wheel-end electrical machines in a battery or fuel cell powered heavy-duty vehicle, which axle speeds can be accurately controlled at high bandwidth. Wheel-slip based vehicle motion management (VMM) and its associated advantages are discussed, e.g., in WO 2017/215751 and also in WO 2021/144010.

Wheel slip and wheel speed-based control of heavy-duty vehicles rely on accurate knowledge of the vehicle speed over ground as well as the rotation speed of the wheel, since these two quantities together determine the wheel slip. The rotation speed of the wheel can be reliably obtained from sensors such as Hall effect sensors or rotary encoders. However, the vehicle speed over ground may be more difficult to obtain robustly and in a cost efficient manner, at least in some challenging environments and operating conditions, such as low friction operating conditions and during maneuvering involving large wheel forces. A global positioning system (GPS) receiver is often able to determine vehicle speed over ground, but satellite systems are prone to error in environments with strong multipath radio propagation and of course require a clear view of the sky to operate, which is not always available. Advanced radar systems and vision-based sensor can also be used to determine vehicle speed over ground, but these sensors may be costly and may also be prone to error due to, e.g., sun glare and interference from nearby transmitters.

US 2004/0138802 discusses use of radar techniques for determining vehicle speed over ground. However, there is a continuing need for reliable and cost-effective methods of determining vehicle speed over ground suitable for use in heavy-duty vehicles controlled based on wheel slip.

### SUMMARY

It is an object of the present disclosure to provide improved methods for determining the speed over ground of a heavy-duty vehicle. The object is obtained by a radar module configured to determine a two-dimensional velocity vector of a heavy-duty vehicle with respect to a ground plane or road surface supporting the vehicle. The system comprises a radar transceiver arranged to transmit and to receive a radar signal via an antenna array. The antenna array is configured to emit the radar signal in a first direction and in a second direction different from the first direction. The radar module further comprises a processing device arranged to detect first and second radar signal components of the received radar signal based on their respective angles of arrival (AoA), where the first radar signal component has an AoA corresponding to the first direction and the second radar signal component has an AoA corresponding to the second direction. The processing device is arranged to determine the two-dimensional velocity vector of the heavy-duty vehicle based on respective Doppler frequencies of the first and second radar signal components.

This way the speed over ground of the vehicle can be determined in a reliable manner in two dimensions, e.g., in longitudinal and lateral directions, by a single radar signal. Compared to the radar systems discussed in US 2004/0138802, the present system uses a single radar transceiver to determine a two-dimensional velocity vector, instead of separate radar transceivers. This allows for a cost efficient system with small physical footprint. Also, the radar system can be more easily calibrated, and allows for integration into a compact wheel end module.

The first direction can for instance be the same direction as the longitudinal direction of the vehicle, and the second direction can be the same direction as the lateral direction of the vehicle, meaning that lateral and longitudinal vehicle velocity components are obtained directly from the Doppler shifts of the radar signal components without any significant post-processing of the received radar signal. Alternatively, the first direction and the second direction can be configured on respective sides of a bore sight direction of the radar module, where the bore sight direction of the radar module is arranged to be aligned with a longitudinal direction of the vehicle. In this case the processing device can be arranged to detect a lateral velocity component of the vehicle based on a difference of the respective Doppler frequencies of the first and second radar signal components without significant computational burden, which is an advantage. This approach is also resilient to calibration errors since the detection of lateral motion is performed in a differential manner.

According to some aspects, the processing device is arranged to detect the first and second radar signal components over respective distances exceeding a distance from the antenna array to the ground plane, i.e., based on a ground-penetrating radar signal which also captures relative motion of a volume under the road surface with respect to the vehicle. This way the measured radial velocities, i.e., the Doppler frequencies of the radar signal components, will not be affected by disturbances on the road surface, such as water, snow, or other matter moving relative to the road surface. The detected Doppler frequencies which form the base for determining the two-dimensional velocity of the vehicle will be more stable and therefore also yield a more reliable estimate of the vehicle speed over ground. The direction of transmission relative to the road surface is preferably configured at an angle relative to the road surface. This angle provides a more pronounced radial motion of the target points relative to the radar transceiver, which is an advantage.

The processing device can optionally be arranged to adjust a setting of the antenna array based on a pre-determined target AoA of the first and second radar signal components during a calibration procedure. This essentially means that the processing device has the capability of calibrating the antenna array used to determine vehicle speed over ground. For example, the vehicle can be controlled to travel without sideslip in the longitudinal direction, and the processing device can then optimize the setting of the antenna array to maximize the radar signal power and the Doppler frequency in the first direction, and to maximize the radar signal power but minimize the Doppler frequency in the second direction. This essentially means that the processing device performs a beam steering operation involving the antenna array in order to focus antenna beams in desired directions. The antenna beams can also be directed at either side of a bore sight direction of the antenna array, in order to enable differential detection of lateral vehicle motion. In this case the processing device will perform beam steering to make the Doppler frequencies of the two radar signal components as equal as possible when the vehicle is driving in the longitudinal direction without sideslip or lateral motion.

According to further aspects, the processing device is arranged to obtain data associated with a steering angle of a wheel of the heavy-duty vehicle, and to transform the two-dimensional velocity vector of the heavy-duty vehicle into a coordinate system of the wheel based on the data associated with the steering angle of the wheel. This way the speed over ground of a given wheel, in the coordinate system of the wheel can be obtained, which is a valuable input to many VMM systems arranged in heavy-duty vehicles. The coordinate system of the wheel is normally defined relative to the rolling direction of the wheel, and hence depends on the applied steering angle. The transform is straight forward from a mathematical point of view, but is more easily performed locally, i.e., close to the wheel. It is an advantage that a central VMM system does not need to obtain steering angles and perform the transform, but instead obtain velocity information that is already transformed into the wheel coordinate system.

The object is also obtained by a wheel end module for a heavy-duty vehicle. The wheel end module comprises a radar system as discussed above, and a wheel speed sensor arranged to determine a rotational velocity of a wheel on the heavy-duty vehicle. The processing device is arranged to determine a wheel slip and/or a slip angle of the wheel based on the rotational velocity of the wheel and on the two-dimensional velocity vector of the heavy-duty vehicle. The wheel end module can be tightly integrated into an integrally formed module with small footprint. The wheel end module is able to determine wheel slip in a stand-alone manner without relying on any external systems, which improves reliability. The wheel end module can be expanded to also comprise an electric machine or at least a controller for an electric machine. This allows the processing device to control an axle speed of the electric machine based on a target wheel slip, in a self-contained manner, which is an advantage. A central VMM system can for instance just send requests for a given wheel slip, and the wheel end module will have the necessary capabilities to actuate according to the request in a self-contained manner.

The wheel end module optionally comprises an inertial measurement unit (IMU), which means that the processing device obtained the capability of outputting one or more acceleration values to a central VMM system in addition to the speed over ground in two dimensions.

There is also disclosed herein control units, vehicles, computer programs, computer readable media, and computer program products associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

The above, as well as additional objects, features and advantages, will be better understood through the following illustrative and non-limiting detailed description of exemplary embodiments, wherein:
- Figure 1: illustrates an example heavy-duty vehicle;
- Figure 2: is a graph showing example tyre forces as function of wheel slip;
- Figure 3: shows an example motion support device control arrangement;
- Figures 4A-C: illustrate an example radar system comprising an antenna array;
- Figure 5: illustrates an example vehicle control function architecture;
- Figure 6: illustrates an example heavy-duty vehicle;
- Figures 7A-B: illustrate a detection principle based on Doppler difference;
- Figure 8: is a flow chart illustrating methods;
- Figure 9: schematically illustrates a control unit;
- Figure 10: shows an example computer program product;
- Figure 11: schematically illustrates a ground radar system; and
- Figures 12A-B: show range-Doppler maps of example received radar signals.

### DETAILED DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

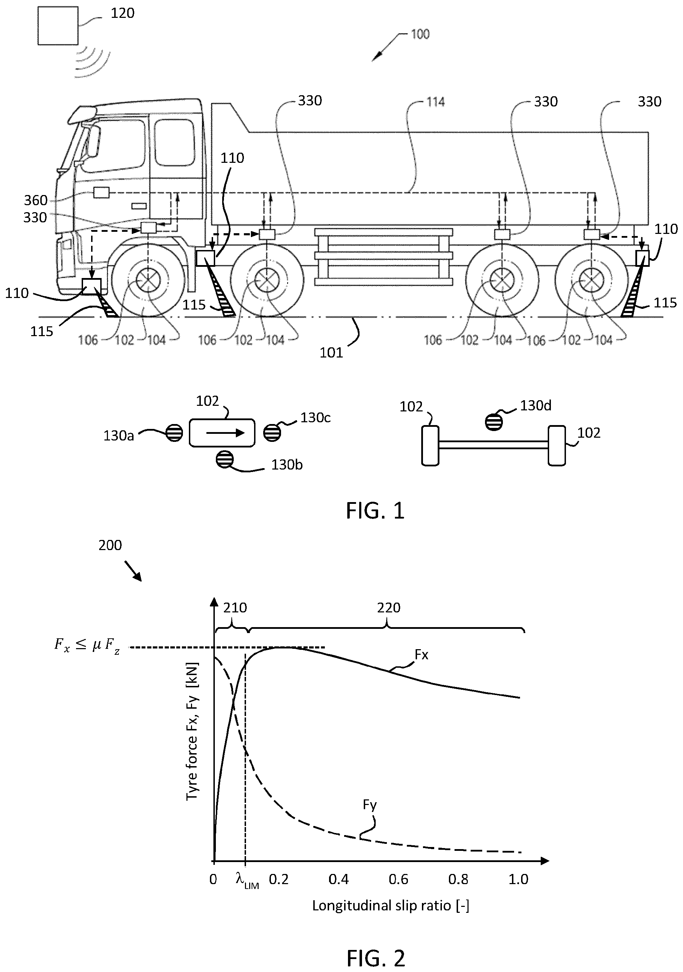

Figure 1 illustrates an example heavy-duty vehicle 100, here in the form of a truck. The vehicle comprises a plurality of wheels 102, wherein at least a subset of the wheels 102 comprises a respective motion support device (MSD) 104. Although the embodiment depicted in Figure 1 illustrates an MSD for each of the wheels 102, it should be readily understood that e.g., one pair of wheels 102 may be arranged without such an MSD 104. Also, an MSD may be arranged connected to more than one wheel, e.g., via a differential arrangement.

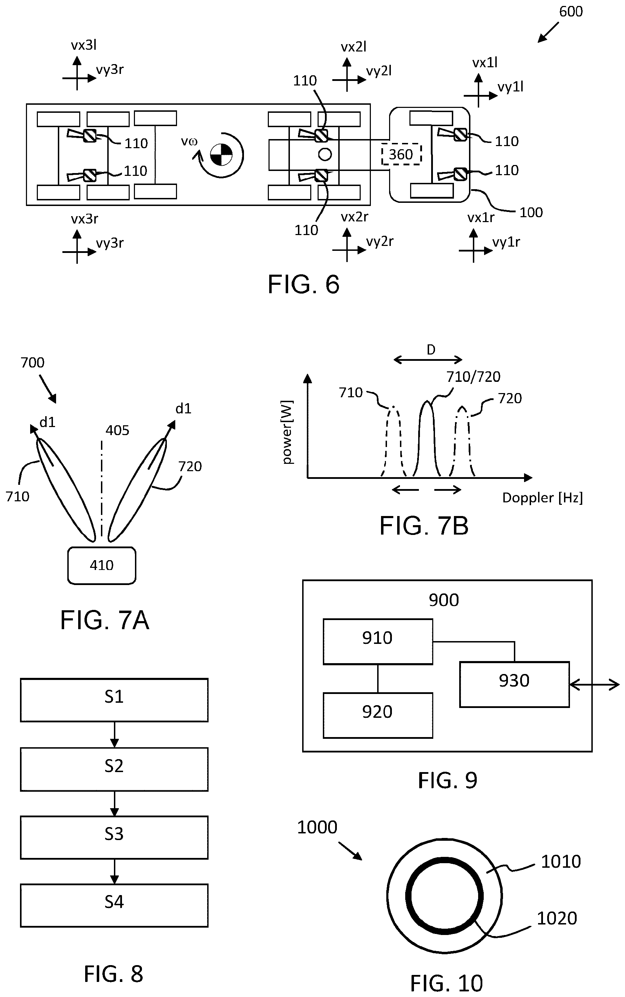

It is appreciated that the herein disclosed methods and control units can be applied with advantage also in other types of heavy-duty vehicles, such as trucks with drawbar connections, construction equipment, buses, and the like. The vehicle 100 may also comprise more than two vehicle units, i.e., a dolly vehicle unit may be used to tow more than one trailer. Some aspects of the herein proposed techniques are particularly suitable for articulated vehicles such as semi-trailers, as will be discussed in more detail below in connection to Figure 6.

The MSDs 104 may be arranged for generating a torque on a respective wheel of the vehicle or for both wheels of an axle. The MSD may be a propulsion device, such as an electric machine 106 arranged to e.g., provide a longitudinal wheel force to the wheel(s) of the vehicle 100. Such an electric machine may thus be adapted to generate a propulsion torque as well as to be arranged in a regenerative braking mode for electrically charging a battery (not shown) or other energy storage system(s) of the vehicle 100. Electric machines may also generate braking torque without storing energy. For instance, brake resistors and the like may be used to dissipate the excess energy from the electric machines during braking. The electric machines may be integrally formed with respective wheel end modules as will be discussed in more detail below.

The MSDs 104 may also comprise friction brakes such as disc brakes or drum brakes arranged to generate a braking torque by the wheel 102 in order to decelerate the vehicle. Herein, the term acceleration is to be construed broadly to encompass both positive acceleration (propulsion) and negative acceleration (braking).

The methods disclosed herein primarily relate to controlling propulsion of heavy-duty vehicles, i.e., acceleration. However, the disclosed methods may also find use in decelerating heavy-duty vehicles, i.e., during braking maneuvers.

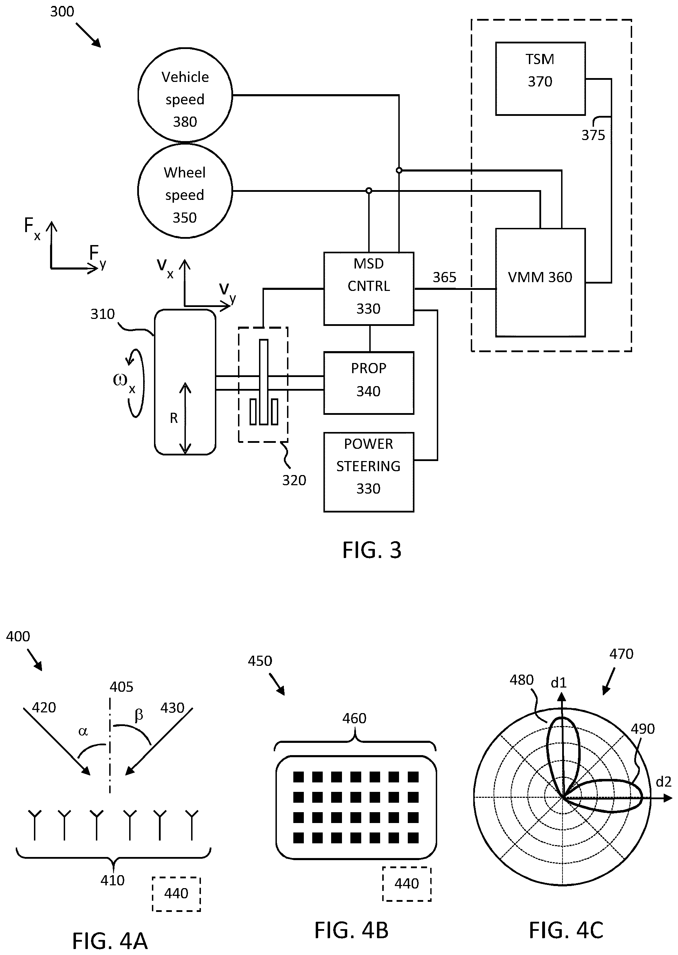

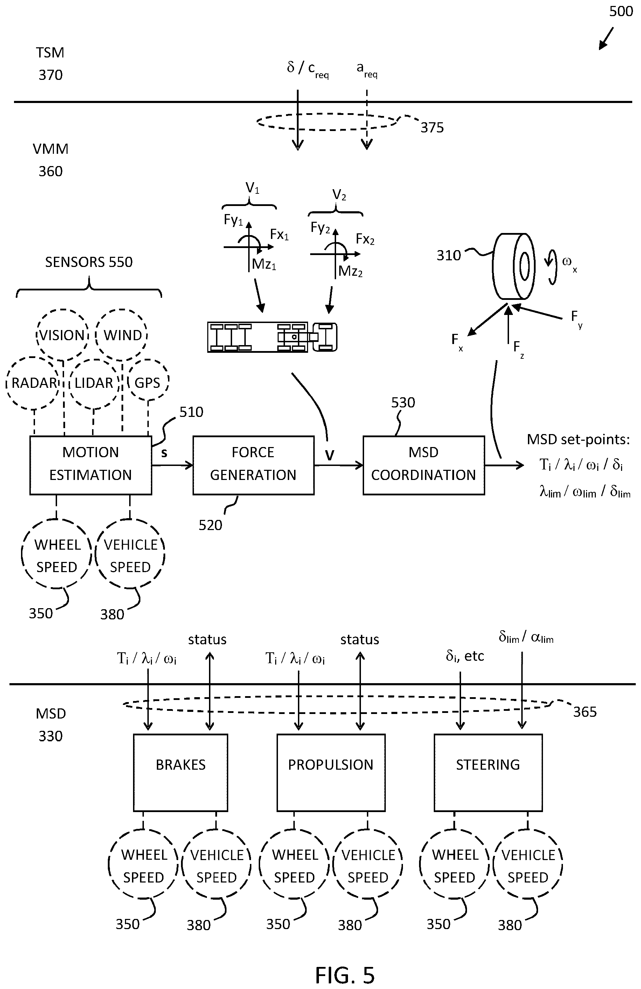

Moreover, each of the MSDs 104 is connected to a respective MSD control system or control unit 330 arranged for controlling operation of the MSD 104. The MSD control system 330 is preferably a decentralized motion support system 330, although centralized implementations are also possible. It is furthermore appreciated that some parts of the MSD control system may be implemented on processing circuitry remote from the vehicle, such as on a remote server 120 accessible from the vehicle via wireless link. Still further, each MSD control system 330 is connected to a VMM system or function 360 of the vehicle 100 via a data bus communication arrangement 114 that can be either wired, wireless or both wired and wireless. Hereby, control signals can be transmitted between the vehicle motion management system 360 and the MSD control system 330. The vehicle motion management system 360 and the MSD control system 330 will be described in further detail below with reference to Figure 3 and Figure 5.

The VMM system 360 as well as the MSD control system 330 may include a microprocessor, microcontroller, programmable digital signal processor or another programmable device. The systems may also, or instead, include an application specific integrated circuit, a programmable gate array or programmable array logic, a programmable logic device, or a digital signal processor. Where the system(s) include(s) a programmable device such as the microprocessor, microcontroller or programmable digital signal processor mentioned above, the processor may further include computer executable code that controls operation of the programmable device. Implementation aspects of the different vehicle unit processing circuits will be discussed in more detail below in connection to Figure 9.

Generally, the MSDs on the vehicle 100 may also be realized as, e.g., a power steering device, active suspension devices, and the like. Although these types of MSDs cannot be used to directly generate longitudinal force to accelerate or brake the vehicle, they are still part of the overall vehicle motion management of the heavy-duty vehicle and may therefore form part of the herein disclosed methods for vehicle motion management. Notably, the MSDs of the heavy-duty vehicle 100 are often coordinated in order to obtain a desired motion by the vehicle. For instance, two or more MSDs may be used jointly to generate a desired propulsion torque or braking torque, a desired yaw motion by the vehicle, or some other dynamic behavior. Coordination of MSDs will be discussed in more detail in connection to Figure 5.

Longitudinal wheel slip *λₓ* may, in accordance with SAE J370 (SAE Vehicle Dynamics Standards Committee January 24, 2008) be defined as ${λ}_{x} = \frac{{Rω}_{x} - {v}_{x}}{max \left(\left|{Rω}_{x}\right|, \left|{v}_{x}\right|\right)}$ where R is an effective wheel radius in meters, *ωₓ* is the angular velocity of the wheel, and *vₓ* is the longitudinal speed of the wheel (in the coordinate system of the wheel). Thus, *λₓ* is bounded between -1 and 1 and quantifies how much the wheel is slipping with respect to the road surface. Wheel slip is, in essence, a speed difference measured between the wheel and the vehicle. Thus, the herein disclosed techniques can be adapted for use with any type of wheel slip definition. It is also appreciated that a wheel slip value is equivalent to a wheel speed value given a velocity of the wheel over the surface, in the coordinate system of the wheel. The VMM 360 and optionally also the MSD control system 330 maintains information on *vₓ* in the reference frame of the wheel, while a wheel speed sensor or the like can be used to determine *ωₓ* (the rotational velocity of the wheel).

Slip angle *α*, also known as sideslip angle, is the angle between the direction in which a wheel is pointing and the direction in which it is actually traveling (i.e., the angle between the longitudinal velocity component *vₓ* and the vector sum of wheel forward velocity *vₓ* and lateral velocity *v_{y}.* This slip angle results in a force, the cornering force, which is in the plane of the contact patch and perpendicular to the intersection of the contact patch and the midplane of the wheel. The cornering force increases approximately linearly for the first few degrees of slip angle, then increases non-linearly to a maximum before beginning to decrease.

The slip angle, *α* is often defined as $α = arctan \left(\frac{{v}_{y}}{\left|{v}_{x}\right|}\right)$ where *v_{y}* is the lateral speed of the wheel in the coordinate system of the wheel.

Herein, longitudinal speed over ground may be determined relative to the vehicle, in which case the speed direction refers to the forward direction of the vehicle or relative to a wheel, in which case the speed direction refers to the forward direction, or rolling direction, of the wheel. The same is true for lateral speed over ground, which can be either a lateral speed of the vehicle or a lateral speed over ground of a wheel relative to its rolling direction. The meaning will be clear from context, and it is appreciated that a straight forward conversion can be applied in order to translate speed over ground between the coordinate system of the vehicle and the coordinate system of the wheel, and vice versa. Vehicle and wheel coordinate systems are discussed, e.g., by Thomas Gillespie in "Fundamentals of Vehicle Dynamics" Warrendale, PA: Society of Automotive Engineers, 1992.

In order for a wheel (or tyre) to produce a wheel force which affects the motion state of the heavy-duty vehicle, such as an acceleration, slip must occur. For smaller slip values the relationship between slip and generated force is approximately linear, where the proportionality constant is often denoted as the slip stiffness Cₓ of the tyre. A tyre is subject to a longitudinal force Fₓ, a lateral force F_{y}, and a normal force F_{z}. The normal force F_{z} is key to determining some important vehicle properties. For instance, the normal force to a large extent determines the achievable longitudinal tyre force Fₓ by the wheel since, normally, *Fₓ* ≤ *µ F_{z},* where *µ* is a friction coefficient associated with a road friction condition. The maximum available lateral force for a given wheel slip can be described by the so-called Magic Formula as described in "Tyre and vehicle dynamics", Elsevier Ltd. 2012, ISBN 978-0-08-097016-5, by Hans Pacejka, where wheel slip and tyre force is also discussed in detail.

Figure 2 is a graph showing an example 200 of achievable tyre forces as function of longitudinal wheel slip. Fx is the longitudinal tyre force while Fy is the maximum obtainable lateral wheel force for a given wheel slip. This type of relationship between wheel slip and generated tyre force is often referred to as an inverse tyre model, and it is generally known. The examples in Figure 2 are for positive wheel forces, i.e., acceleration. Similar relationships exist between wheel slip and negative wheel force, i.e., braking.

An inverse tyre model can be used to translate between a desired longitudinal tyre force Fₓ and longitudinal wheel slip *λₓ*. The interface between VMM and MSDs capable of delivering torque to the vehicle's wheels has as mentioned above traditionally been focused on torque-based requests to each MSD from the VMM without any consideration towards wheel slip. However, this approach has some performance limitations. In case a safety critical or excessive slip situation arises, then a relevant safety function (traction control, anti-lock brakes, etc.) operated on a separate control unit normally steps in and requests a torque override in order to bring the slip back into control. The problem with this approach is that since the primary control of the actuator and the slip control of the actuator are allocated to different electronic control units (ECUs), the latencies involved in the communication between them significantly limits the slip control performance. Moreover, the related actuator and slip assumptions made in the two ECUs that are used to achieve the actual slip control can be inconsistent and this in turn can lead to sub-optimal performance. Significant benefits can be achieved by instead using a wheel speed or wheel slip-based request on the interface between VMM 360 and the MSD controller or controllers 330, thereby shifting the difficult actuator speed control loop to the MSD controllers, which generally operate with a much shorter sample time compared to that of the VMM system. Such an architecture can provide much better disturbance rejection compared to a torque-based control interface and thus improves the predictability of the forces generated at the tyre road contact patch.

Referring again to Figure 2, the example longitudinal tyre force Fx shows an almost linearly increasing part 210 for small wheel slips, followed by a part 220 with more non-linear behavior for larger wheel slips. It is desirable to maintain vehicle operation in the linear region 210, where the obtainable longitudinal force in response to an applied brake command is easier to predict, and where enough lateral tyre force can be generated if needed. To ensure operation in this region, a wheel slip limit λₗᵢₘ on the order of, e.g., 0.1 or so, can be imposed on a given wheel. Thus, having accurate knowledge of current wheel slip, operation in the linear region can be ensured, which greatly simplifies vehicle motion control for both safety, efficiency, and driver comfort.

A problem encountered when using wheel slip to actively control one or more wheels on a heavy-duty vehicle, such as the vehicle 100, and also when executing more low complex control such as imposing the above-mentioned wheel slip limit λₗᵢₘ locally at wheel end, is that the speed over ground *vₓ* of the wheel (and of the vehicle) may not be accurately known. For instance, if wheel speed sensors such as Hall effect sensors or rotational encoders are used to determine vehicle speed over ground, then the vehicle speed over ground will be erroneously determined in case the wheels used for estimating the speed over ground are themselves slipping. Also, vehicle speed over ground determined based on wheel rotation is one-dimensional, i.e., the method does not allow determining a wheel lateral speed over ground *v_{y}* in addition to the longitudinal speed over ground *vₓ*, i.e., a speed vector in two dimensions. This of course makes estimating the sideslip angle α challenging.

Satellite based positioning systems can be used to determine the speed over ground of a heavy-duty vehicle 100 and of any given wheel on the vehicle 100. However, these systems do not function well in some environments, such as environments without a clear view of the sky. Multipath propagation of the satellite radio signals can also induce large errors in the estimated vehicle position, which then translates into errors in the estimated vehicle speed over ground.

Vision-based sensor systems and radar systems can also be used to determine vehicle speed over ground. However, such systems are relatively costly and not always without issues when it comes to accuracy and reliability. Vision-based sensor may for instance suffer from performance degradation due to sun glare while radar sensor systems may be prone to interference from other radar transceivers.

The present disclosure proposes the use of radar to determine both longitudinal and lateral velocity of a vehicle with respect to ground. With reference to Figure 1, a radar module 110 can be configured to determine a two-dimensional velocity vector [*vₓ,v_{y}*] of a heavy-duty vehicle 100 with respect to a ground plane or road surface 101 supporting the vehicle 100. This type of radar system comprises a radar transceiver arranged to transmit and to receive a radar signal 115 via an antenna array. The principle of determining speed over ground builds on the disclosure of US 2004/0138802, but has a more efficient implementation due to that a single radar transceiver is used to determine velocity in two dimensions, whereas US 2004/0138802 uses separate radar transceivers for each dimension.

US 4,845,506 describes an antenna system suitable for use in ground speed radar systems such as those discussed herein. A switch is implemented that can be used to direct the antenna lobe in either of two fixed directions. The antenna can be used to determine longitudinal velocity of a vehicle if the two directions are aligned with the forward directions of a vehicle, and also lateral velocity of the vehicle if another separate antenna system is mounted on the vehicle with the two directions aligned laterally compared to the forward direction of the vehicle. US 4,845,506 does not describe an array processing system able to analyze radar signal energy received simultaneously from arbitrary azimuth directions.

DE 3885397 describes an antenna array that generates two fixed lobes pointing in different azimuth directions. The antenna array is used in a radar system to determine longitudinal velocity of a vehicle. The two directions are fixed directions, and the processing circuitry described in DE 3885397 is not able to exploit more dynamic angle of arrival signal processing to identify suitable received radar signal component for determining a two-dimensional velocity vector of a vehicle.

US 3,363,253 describes a four-beam antenna with fixed direction beams that can be used for ground speed determination. The system is not set up to separate radar signal components received via the same antenna array from each other based on the respective angles of arrival.

EP0095300 describes a vehicle mounted Doppler radar system which comprises a fixed-beam antenna system in Janus configuration. The beams are directed such that the impact of vehicle vibration is minimized. There is no dynamic angle of arrival signal processing in the system of EP0095300, i.e., the system uses fixed beams for transmission and for reception of radar signal energy, instead of detecting different simultaneously received radar signal components of the received radar signal, and separating them from each other, based on their respective angle of arrival.

DE19720846 discloses a system for measuring the speed of a vehicle using a ground speed radar system. The system comprises a fixed beam antenna in Janus configuration, and is not able to separate radar signal components received simultaneously by the same antenna array based on the respective angles of arrival.

The radar transceiver illuminates a small portion of the road surface, as illustrated in the inserted illustrations at the bottom of Figure 1. Various illumination patterns can be selected, but it is an advantage if the illuminated portion of the ground surface by a given radar transceiver is close to a wheel and relatively small in size. As shown in Figure 1, the illuminated portion of ground plane 101 can be directly behind 130a the contact patch of a wheel 102, to the side 130b of the contact patch of the wheel 102, or in front 130c of the contact patch of the wheel 102. An illuminated portion of ground plane 130d can also be centered on an axle, as shown to the right. The illuminated portion of ground plane is preferably within 1 m of the contact patch of a wheel, since this allows a better idea of how the wheel is moving relative to the road surface. The illuminated portion of ground plane is even more preferably within 0.5 m of the contact patch of a wheel.

The radar transceiver is arranged to transmit a radar signal over a radar bandwidth, where a larger bandwidth improves range resolution in a known manner. Velocity resolution depends on the radar wavelength and the repetition period of the waveform in a known manner. According to some aspects, the transceiver is arranged to transmit a frequency modulated continuous wave (FMCW) radar signal over the radar bandwidth, where a frequency chirp is swept over the radar bandwidth in cycles. Other types of radar signal formats may also be used, such as band-spread radar signals where orthogonal codes are used to spread a modulated signal over a wide frequency band, or an orthogonal frequency division multiplexed (OFDM) radar signal. Given an FMCW radar signal format, the distance to the ground plane 101 (and also to reflecting material under the road surface) may be determined based on a first Discrete Fourier Transform (DFT), or Fast Fourier Transform (FFT), and the radial velocity or Doppler frequency of the illuminated portion of ground may be determined based on a second DFT or FFT, in a known manner. The result of applying a range FFT and a Doppler FFT is often denoted a range-Doppler map or R-D map for short. A range-Doppler map is a matrix of complex values, where each column index corresponds to backscatter energy received at a given radar antenna from reflections at a given range, and where each row index corresponds to radar backscatter energy received at a given radar antenna from reflections at a given radial velocity relative to the position of the radar transceiver. A good overview of rudimentary FMCW radar processing is given in the lecture notes "Introduction to mmwave Sensing: FMCW Radars" by Sandeep Rao, Texas Instruments, 2017. The Doppler frequency at the range corresponding to the distance between the radar transceiver and ground is indicative of the radial speed at which the ground moves relative to the radar transceiver, as explained in US 2004/0138802.

The antenna array comprised in the radar module 110 is configured to emit the radar signal 115 in a first direction d1 and in a second direction d2 different from the first direction. This means that the radar signal illuminates the ground plane 101 in at least two directions. This can be done by illuminating a larger area of the road surface by a relatively broad antenna beam, or by illuminating two or more separate sections of the ground plane or road surface 101 by a plurality of more narrow beams. The radar system is arranged to be mounted to the vehicle chassis, as shown in Figure 1, such that both the first direction and the second direction points towards the ground, but in different directions. Since the radar illuminates the ground in at least two different directions, it is able to receive backscattered radar signals from two or more different directions. This can be exploited by array signal processing at the radar system in order to determine vehicle velocity in more than one dimension, i.e., in longitudinal and lateral directions, relative to the vehicle or relative to a wheel on the vehicle, including both steered and non-steered wheels, using a single radar transceiver instead of two or more radar transceivers as proposed in US 2004/0138802.

The radar module 110 further comprises a processing device arranged to detect first and second radar signal components of the received radar signal 115 based on their respective angle of arrival (AoA) according to the techniques discussed above, where the first radar signal component has an AoA corresponding to the first direction d1 and the second radar signal component 430 has an AoA corresponding to the second direction d2.

An antenna array is a device comprising a plurality of antenna elements. Each pair of transmit antenna and receive antenna in the array gives rise to a respective range-Doppler map, indicating received radar signal energy at different distances and radial velocities. Each range-Doppler map cell is a complex value associated with a phase and a magnitude, in a known manner.

A complex-valued vector of signal values corresponding to a given range and Doppler can be obtained by extracting corresponding values from the R-D map of each antenna pair. The array may comprise multiple antenna elements that are spaced uniformly such as on the order of a half-lambda. Alternatively they may be spaced more than half lambda. Some previously known radar systems use multiple transmission antennas either sequentially or simultaneously in time to create a virtual aperture sometimes referred to as a Synthetic Aperture Radar (SAR), that is larger than the physical array. The net effect is a relatively small number of real or virtual antenna elements and a relatively small physical aperture. The angle of arrival of an incoming radar reflection can be determined conveniently by a third FFT - the angle FFT, applied to range-Doppler cells from each range-Doppler map generated by each transmit-antenna pair in the radar sensor array, after appropriate zero-padding. The determination of target angle using an FFT may for instance be realized using the Bartlett algorithm. The Bartlett algorithm is generally known and will therefore not be discussed in more detail herein. In case the antenna element spacing is non-uniform, a zero-padding of the complex-valued vector may be needed prior to the FFT operation.

The processing device 440 is arranged to determine the two-dimensional velocity vector of the heavy-duty vehicle 100 based on respective Doppler frequencies of the first and second radar signal components. Thus, to summarize, the radar transceiver illuminates one or more portions of the road surface under the vehicle, and receives backscattered energy from the road surface from two directions. The use of an antenna array allows the processing device to perform AoA signal processing to separate backscattered radar signal energy which arrives from different directions. The radial velocity of the road surface in the two different directions will be indicative of the velocity of the vehicle in two dimensions, or even in three dimensions in case a more advanced antenna array is used, such as a two-dimensional antenna array. For instance, if the first direction is a longitudinal direction of the vehicle 100 and the second direction is a lateral direction of the vehicle 100, then the Doppler information of the first and the second radar signal components will be directly indicative of the vehicle longitudinal and lateral speeds. The radar transceiver can also be mounted together with a steered wheel, and turn as the wheel is steered, which means that the velocity components will be determined in the coordinate system of the wheel without need for mathematical transforms from a vehicle coordinate system into the coordinate system of the wheel.

Figures 4A and 4B illustrate two example antenna arrangements 400, 450 The antenna array 400 in Figure 4A comprises a plurality of antenna elements 410 arranged on a line, and is therefore able to both emit and receive signals from different directions in a plane, essentially forming antenna lobes in the different directions (at least for receiving backscattered radar signal). The antenna array can for instance be arranged to emit and to receive radar signals in different azimuth directions relative to the position of the radar transceiver. Figure 4C shows an example antenna diagram of how antenna gain (after array signal processing), may vary over azimuth angle. This particular example antenna array has been configured to emit radar energy in a first direction d1 which coincides with a longitudinal direction of the vehicle 100, and in a second direction d2 which coincides with a lateral direction of the vehicle. Thus, radial motion in the first direction is indicative of longitudinal velocity of the vehicle while radial motion in the second direction is indicative of vehicle velocity in the lateral direction of the vehicle.

The antenna array 450 schematically illustrated in Figure 4B comprises a plurality of antenna elements 410 arranged on a two-dimensional grid (seen from in front of the array). Radar signal energy emitted via this antenna array can be steered in both azimuth and elevation dimensions, allowing the antenna array to focus radar signal energy with additional degrees of freedom compared to the array 400 in Figure 4A. Antenna lobes can also be focused or made more broad by configuration of the antenna array, using known beamforming techniques.

If the two directions d1 and d2 are pointing in some other direction compared to the vehicle longitudinal and lateral directions, then a transform may be required in order to obtain the vehicle speed in longitudinal and lateral directions. This transform is straight forward and will therefore not be discussed in more detail herein.

Particular advantages when it comes to determining vehicle lateral speed are obtained in that the first direction and the second direction are configured on respective sides of a bore sight direction of the radar module configured to be aligned with a longitudinal direction of the vehicle. With that the processing device 440 can detect a lateral velocity component of the vehicle based on a difference of the respective Doppler frequencies of the first and second radar signal components. Figures 7A and 7B illustrate the concept, where Figure 7A is a top view of an example radar system mounted to a heavy-duty vehicle 100. Suppose that the radar system has been mounted to the vehicle 100 such that its bore sight direction 405 coincides with the longitudinal direction of the vehicle 100. Figure 7B shows example signal powers of the radar signals received from the different directions d1 and d2. Now, if the vehicle is travelling in the bore sigh direction 405, i.e., if there is no lateral motion, then the radial motion of the road surface will be equal for the two directions. I.e., the Doppler frequency of the signal component received by focusing the antenna array 410 as indicated by the antenna lobe 710 will be the same as that obtained when focusing the antenna array 410 as indicated by the antenna lobe 720. Any lateral velocity of the vehicle will give an unbalance in the Doppler frequencies of the two antenna lobes 710, 720, i.e., the Doppler frequency measured in the first direction d1 will differ from the Doppler frequency measured in the second direction d2. If the radar component signal power is plotted vs Doppler frequency, as schematically indicated in Figure 7B, then a vehicle travelling along the bore sight direction will show radar signal components having Doppler frequencies which are the same or at least similar. A lateral velocity will give rise to a difference D in Doppler frequency for the first direction d1 and the second direction d2, as shown in Figure 7B. This difference in Doppler frequency is indicative of the lateral velocity of the vehicle with respect to the ground 101.

Figure 3 schematically illustrates functionality 300 for controlling an example wheel 310 on the vehicle 100 by some example MSDs here comprising a friction brake 320 (such as a disc brake or a drum brake), a propulsion device 340 and a power steering arrangement 330. The friction brake 320 and the propulsion device are examples of wheel torque generating devices, which can be controlled by one or more motion support device control units 330. The control is based on, e.g., measurement data obtained from a wheel speed sensor 350 and from other vehicle state sensors, such as radar sensors, lidar sensors, and also vision based sensors such as camera sensors and infra-red detectors. An MSD control system 330 may be arranged to control one or more actuators. For instance, it is common that an MSD control system 330 is arranged to control both wheels on an axle.

The TSM function 370 plans driving operation with a time horizon of 10 seconds or so. This time frame corresponds to, e.g., the time it takes for the vehicle 100 to negotiate a curve or the like. The vehicle maneuvers, planned and executed by the TSM function, can be associated with acceleration profiles and curvature profiles which describe a desired target vehicle velocity in the vehicle forward direction and turning to be maintained for a given maneuver. The TSM function continuously requests the desired acceleration profiles a_{req} and steering angles (or curvature profiles c_{req}) from the VMM system 360 which performs force allocation to meet the requests from the TSM function in a safe and robust manner. The VMM system 360 operates on a timescale of below one second or so and will be discussed in more detail below.

The wheel 310 has a longitudinal velocity component *vₓ* and a lateral velocity component *v_{y}* (in the coordinate system of the wheel or in the coordinate system of the vehicle, depending on implementation). There is a longitudinal wheel force Fₓ and a lateral wheel force F_{y}, and also a normal force F_{z} acting on the wheel (not shown in Figure 3). Unless explicitly stated otherwise, the wheel forces are defined in the coordinate system of the wheel, i.e., the longitudinal force is directed in the rolling plane of the wheel, while the lateral wheel force is directed normal to the rolling plane of the wheel. The wheel has a rotational velocity *ωₓ,* and a radius R.

A vehicle speed sensor 380 based on the herein disclosed radar systems is used to determine vehicle speed over ground, which can then be translated into wheel speed components *vₓ* and/or *v_{y},* in the coordinate system of the wheel. This means that the wheel steering angle δ is taken into account if the wheel is a steered wheel, while a non-steered wheel has a longitudinal velocity component which is the same as the vehicle unit to which the wheel is attached. The type of inverse tyre models exemplified by the graph 200 in Figure 2 can be used by the VMM 360 to generate a desired tyre force at some wheel. Instead of requesting a torque corresponding to the desired tyre force, the VMM can translate the desired tyre force into an equivalent wheel slip (or, equivalently, a wheel speed relative to a speed over ground) and request this slip instead. The main advantage being that the MSD control device 330 will be able to deliver the requested torque with much higher bandwidth by maintaining operation at the desired wheel slip, using the vehicle speed *vₓ* from the vehicle speed sensor 380 and the wheel rotational velocity *ωₓ,* obtained from the wheel speed sensor 350.

The control unit or units can be arranged to store one or more pre-determined inverse tyre models in memory, e.g., as look-up tables or parameterized functions. An inverse tyre model can also be arranged to be stored in the memory as a function of the current operating condition of the wheel 310.

Particular advantages can be obtained as the radar systems discussed herein are integrated into a wheel end module, i.e., a highly integrated device mounted close to a wheel of the heavy-duty vehicle. A plurality of such wheel end modules can then be used to provide efficient vehicle motion management of a heavy-duty vehicle, as illustrated in Figure 6, which shows an articulated heavy-duty vehicle that comprises a plurality of radar systems 110, each radar system providing a two-dimensional speed over ground of the vehicle at its respective location. By central processing of the output data from the different radar modules, an accurate vehicle motion state can be determined, including yaw motion vω. It is understood that particular advantages can be obtained if the radar system 110 is integrated into a wheel end module for a heavy-duty vehicle 100 which also comprises additional functions. The wheel end module comprises the radar system 110 according to the discussion above, and also a wheel speed sensor 350 arranged to determine a rotational velocity *ωₓ* of a wheel 310 on the heavy-duty vehicle 100. The processing device 440 (which may comprise more than one processing circuit, possibly distributed over the vehicle 100) is arranged to determine a wheel slip λ and/or a slip angle α of the wheel 310 based on the rotational velocity *ωₓ* of the wheel 310 and on the two-dimensional velocity vector vx, vy of the heavy-duty vehicle 100.

The wheel end module optionally comprises an electric machine 340, or at least a control unit for controlling an electric machine. The processing device 440 can then be arranged to control an axle speed of the electric machine 340 based on a target wheel slip λ. This integrates both wheel slip determination and wheel slip control into a single wheel end module which can be mounted close to the wheel of a heavy-duty vehicle, where it can facilitate high bandwidth, i.e., rapid, wheel slip control. Further advantages are obtained of the wheel end module also comprises an inertial measurement unit (IMU), in which case the processing device 440 can be arranged to output one or more acceleration values to the central VMM system 360. This means that the VMM system 360 can obtain both accelerations, speeds over ground, and wheel slip from the wheel end module, allowing the VMM system close to full data about the current motion of the heavy-duty vehicle 100 in a dependable and cost efficient manner.

The radar system 110 can as explained above determine vehicle speed components in two dimensions by processing Doppler frequency of radar signal components received from first and second different directions, using the same radar signal, which is an advantage. Further advantages can, however, be obtained by arranging the processing device to detect the first and second radar signal components 420, 430 over respective distances exceeding a distance from the antenna array 400, 450 to the ground plane 101, i.e., by configuring the radar transceiver as a ground penetrating radar transceiver.

There is also disclosed herein a method for determining speed over ground of a heavy-duty vehicle based on a ground-penetrating radar operation. The method comprises configuring a ground-penetrating radar transceiver with a first and second transmission lobe having respective directions pointing towards a road surface supporting the heavy-duty vehicle. The method comprises detecting first and second Doppler frequencies associated with at least one target point at a distance below the ground plane 101, and determining the speed over ground of the heavy-duty vehicle based on the detected Doppler frequencies in two dimensions. This way the radial velocity of the target point or points will not be affected by disturbances on the road surface, such as water, snow, or other matter moving relative to the road surface. The detected Doppler frequencies will be more stable and therefore also yield a more reliable estimate of the vehicle speed over ground.

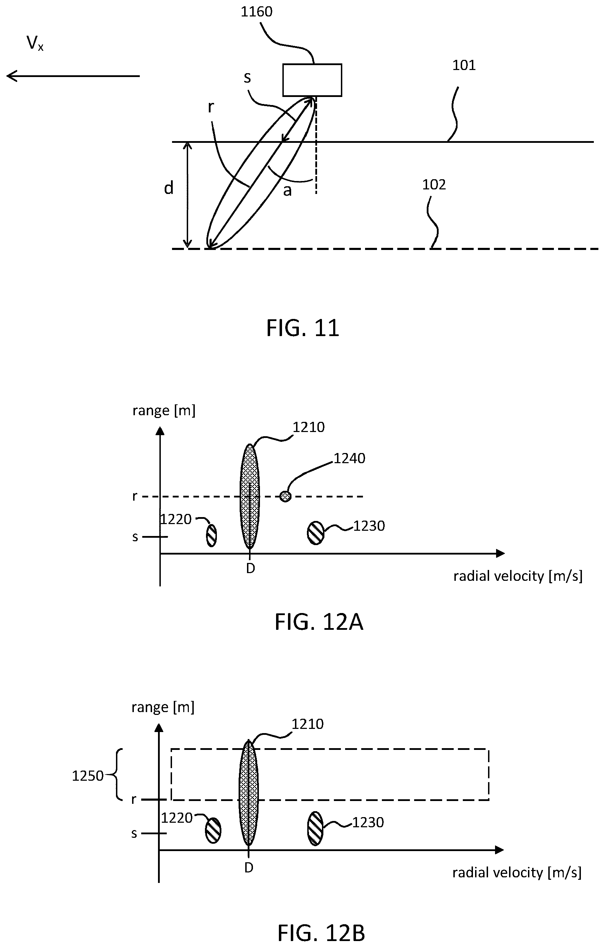

Figure 11 illustrates a ground-penetrating radar transceiver 1160 which can be used to determine vehicle speed over ground regardless of the surface conditions, i.e., regardless of whether the road surface is smooth or scattering radar signals, and regardless of whether there is reflective matter on the road surface which moves relative to the road surface. The reason is that the radar transceiver has a transmission lobe which penetrates the road surface 101 and extends beyond the road surface. Thus, there are radar reflections generated also from points below the actual road surface, such as in the plane 102 which lies a distance d below the road surface 101. In the example of Figure 11, the transmission lobe intersects the plane 102 at range r, while the road surface 101 is at a distance s (smaller than r) from the radar transceiver 1160 along the direction of the main transmission lobe. The reflections from this point below the surface can normally be guaranteed to be stable and to provide a good foundation for establishing the vehicle speed over ground, regardless of any moving matter at the road surface 101.

According to some aspects, the plane 102 is a road foundation layer which is associated with relatively strong scattering. The actual distance r at which the speed over ground is determined is not so important, as long as it is below the surface 101, away from the matter which may be moving there and cause errors in the determination of the speed over ground.

The radar transceiver is advantageously configured with a boresight direction of a transmission lobe in the longitudinal direction of the vehicle that intersects the road surface 101 at an angle a, as shown in Figure 11. This angle a may vary from implementation to implementation, but a value between 30-70 degrees has been found to give satisfactory results, and preferably about 45 degrees. It is noted that the radar transceiver 1160 will detect relative velocity in its radial direction only, and not see the tangential component of the relative velocity between radar transceiver and a detected target. Thus, depending on the angle a, a compensation is necessary: ${v}_{x} = {F}_{D} cos \left(90-a\right)$ where *F_{D}* is the radial velocity determined from the Doppler frequency of the target point under the road surface. The radar signal processing involved in determining relative speed from received radar reflections is generally known and will not be discussed in more detail herein. The techniques described in, e.g., EP1739451 A1 can be applied with advantage to determine *F_{D}.*

The radar transceiver 1160 is preferably configured with a transmission lobe azimuth angular width below ten degrees, and preferably below five degrees, i.e., a relatively narrow beam. This narrow beam decreases the amount of reflections received from the ambient environment and from the vehicle itself, and therefore simplifies detecting the Doppler frequency associated with the point under the road surface 101.

The carrier frequency of the radar transceivers discussed herein is preferably in the GHz range, such as above 30 GHz and preferably around 80 GHz or so. The reason for preferring this high carrier frequency is the small wavelength which allows scattering even from relatively smooth surfaces and/or homogenous materials. The small wavelength also improves the velocity resolution of the proposed techniques.

Figure 12A schematically illustrates an example range-Doppler map of a received radar signal. Range-Doppler maps are generally known to visualize received radar echoes based on the range to the target and the radial velocity of the target relative to the radar transceiver (determined from the Doppler shift on the received signal relative to the transmitted signal in a known manner). A range-Doppler map allows a receiver to separate radar detections which are at different ranges from the radar transceiver and/or are moving with different radial velocities relative to the radar transceiver. To determine the radial motion velocity of the point 1210 relative to the radar transceiver, a control unit only has to read out the Doppler frequency at the specified range r. Due to the azimuth width and the direction of the main transmission lobe, the reflections from the point 1210 will normally dominate over other weaker reflections, at least if averaged over some short period of time.

Figure 12A illustrates a common situation where there are several detections 1210, 1220, 1230 at ranges close to the road surface, i.e., around the range s. Hence, it is difficult to know which of the detections that indicate the true vehicle speed over ground. However, all detections 1210 in the transmission lobe at ranges around the range r, corresponding to the point under the road surface, is normally free from clutter. To find the speed over ground, the strongest detection at some range r greater than the range s is first found. The Doppler frequency (or, equivalently, the radial relative velocity D) associated with this detection is then used to determine the speed over ground of the vehicle. **If** there is more than one Doppler frequency bin with non-negligible detection energy, i.e., more than one radar detection 1210, 1240 at the specified range r, then a weighted sum can be formed to estimate the radial velocity. The weights can be determined based on the energy in each Doppler frequency bin. The strongest detection at the specified range r can also be selected, since it is most likely that the strongest detection corresponds to the desired radial velocity.

The range r at which the Doppler value is determined can advantageously be determined relative to the road surface, say about 10 cm beyond the range to the road surface, i.e., according to some aspects $r = s + Δ \left[m\right]$ where Δ is the positive offset value added to s to obtain r. This means that the actual range r changes continuously to follow, e.g., motion of the vehicle along a normal vector to the road surface, but stays more or less at the same distance relative to the road surface 101. The road surface at distance s is often visible as a strong reflection, although the Doppler content at this range s may comprise more than one component due to clutter as discussed above. Thus, according to some aspects, the radar transceiver may first detect the distance s from the radar transceiver 1160 to the road surface along the pointing direction of the antenna transmission lobe and then determine the distance r to the point of interest below the road surface 101 relative to the road surface distance s, e.g., by adding a predetermined positive offset Δ to the detected distance s as discussed above. According to other aspects, the radar transceiver 160 may just determine the distance d below the road surface 101 as a pre-determined distance from the radar transceiver 1160. In this case any suitable distance r may be selected as long as it is larger than the distance s.

To improve accuracy further, the radar transceiver 1160 may be configured to receive data indicative of a vehicle height over ground, or a height over ground of the radar transceiver 1160. This type of data may, e.g., be obtained from a linear position sensor configured in connection to the vehicle suspension, such as a suspension system sensor. Thus, as the vehicle moves up and down along a normal to the road surface, the detected Doppler frequency can be adjusted to account for the motion, which improves the estimated speed over ground in the longitudinal direction.

Figure 12B illustrates another example range-Doppler map. In this case the radar transceiver 1160 detects the Doppler frequency associated with the target point as an average Doppler frequency associated with a range of distances corresponding to a volume below the road surface. Alternatively, the radar transceiver 1160 may perform a weighted combination of the strongest detections in the range 1250 to determine the Doppler frequency from which vehicle speed over ground is determined, where the weights can be configured as a function of detection strength.

The processing device 440 is, according to some aspects, arranged to adjust a setting of the antenna array 400, 450 based on a pre-determined target AoA of the first and second radar signal components. This means that the processing device may calibrate the settings of the antenna array, i.e., the beamforming weights of the antenna array or its phase settings, in order to point the antenna lobes in the desired directions, such as the longitudinal and lateral directions of the vehicle 100. For example, the vehicle can be controlled to travel without sideslip in the longitudinal direction, and the processing device can then optimize the setting of the antenna array to maximize the radar signal power and the Doppler frequency in the first direction, and to maximize the radar signal power but minimize the Doppler frequency in the second direction. This essentially means that the processing device performs a beam steering operation involving the antenna array in order to focus antenna beams in desired directions. The antenna beams can also be directed at either side of a bore sight direction of the antenna array, in order to enable differential detection of lateral vehicle motion. In this case the processing device will perform beam steering to make the Doppler frequencies of the two radar signal components as equal as possible when the vehicle is driving in the longitudinal direction without sideslip or lateral motion.

Figure 5 illustrates an example vehicle control function architecture applicable with the herein disclosed methods, where the TSM function 370 generates vehicle motion requests 375, which may comprise a desired steering angle δ or an equivalent curvature c_{req} to be followed by the vehicle, and which may also comprise desired vehicle unit accelerations areq and also other types of vehicle motion requests, which together describe a desired motion by the vehicle along a desired path at a desired velocity profile. It is understood that the motion requests can be used as base for determining or predicting a required amount of longitudinal and lateral forces which needs to be generated in order to successfully complete a maneuver.

The VMM system 360 operates with a time horizon of about 1 second or so, and continuously transforms the acceleration profiles a_{req} and curvature profiles c_{req} from the TSM function into control commands for controlling vehicle motion functions, actuated by the different MSDs of the vehicle 100 which report back capabilities to the VMM, which in turn are used as constraints in the vehicle control. The VMM system 360 performs vehicle state or motion estimation 510, i.e., the VMM system 360 continuously determines a vehicle state s comprising positions, speeds, accelerations, and articulation angles of the different units in the vehicle combination by monitoring operations using various sensors 550 arranged on the vehicle 100, often but not always in connection to the MSDs. An important input to the motion estimation 510 may of course be the signals from the vehicle speed sensor 380 and the wheel speed sensors 350 on the heavy duty vehicle 100, where the vehicle speed sensor 380 comprises a radar-based system as discussed herein.

The result of the motion estimation 510, i.e., the estimated vehicle state s, is input to a force generation module 520 which determines the required global forces V=[V₁, V₂] for the different vehicle units to cause the vehicle 100 to move according to the requested acceleration and curvature profiles a_{req}, c_{req}, and to behave according to the desired vehicle behavior. The required global force vector V is input to an MSD coordination function 530 which allocates wheel forces and coordinates other MSDs such as steering and suspension. The MSD coordination function outputs an MSD control allocation for the i:th wheel, which may comprise any of a torque Tᵢ, a longitudinal wheel slip λᵢ, a wheel rotational speed ωᵢ, and/or a wheel steering angle δᵢ. The coordinated MSDs then together provide the desired lateral Fy and longitudinal Fx forces on the vehicle units, as well as the required moments Mz, to obtain the desired motion by the vehicle combination 100.

The MSD control units may obtain wheel speed from one or more wheel speed sensors 350, and also a reliable vehicle speed over ground 380 from the radar modules discussed herein.

Thus, according to some aspects of the present disclosure, the VMM system 360 manages both force generation and MSD coordination, i.e., it determines what forces that are required at the vehicle units in order to fulfil the requests from the TSM function 370, for instance to accelerate the vehicle according to a requested acceleration profile requested by TSM and/or to generate a certain curvature motion by the vehicle also requested by TSM. The forces may comprise e.g., yaw moments Mz, longitudinal forces Fx and lateral forces Fy, as well as different types of torques to be applied at different wheels. The forces are determined such as to generate the vehicle behavior which is expected by the TSM function in response to the control inputs generated by the TSM function 370.

Figure 6 illustrates an example heavy-duty vehicle 100 with a towing truck configured to tow a trailer unit in a known manner. The vehicle 100 comprises a system 600 of radar systems 110 distributed over the heavy-duty vehicle 100. This enables the VMM system 360 to determine relative vehicle motion of the different parts of the vehicle, and also a rotation, such as a yaw motion vω. In other words, the VMM system 360 may be arranged to determine a yaw motion of the vehicle 100 based on the speed over ground of the vehicle 100 at the different radar modules 110. Wheel end modules, as discussed herein, can also be distributed over a heavy-duty vehicle 100 in this manner, allowing the VMM system 360 to obtain a detailed view of the motion of the vehicle.

Figure 7 is a flow chart illustrating a method which summarizes some of the key concepts discussed above. There is illustrated a computer implemented method for determining a two-dimensional velocity vector of a heavy-duty vehicle 100 with respect to a ground plane or road surface 101 supporting the vehicle 100. The method comprises arranging S1 a radar transceiver to transmit and to receive a radar signal, via an antenna array, configuring S2 the antenna array to emit the radar signal in a first direction and in a second direction different from the first direction, detecting S3 first and second radar signal components of the received radar signal, by a processing device, based on their respective AoA, where the first radar signal component has an AoA corresponding to the first direction and the second radar signal component has an AoA corresponding to the second direction, and determining S4 the two-dimensional velocity vector of the heavy-duty vehicle based on respective Doppler frequencies of the first and second radar signal components.

Figure 9 schematically illustrates, in terms of a number of functional units, the components of a control unit 900 according to embodiments of the discussions herein, such as any of the MSD control system 330 or the VMM system 360. Processing circuitry 910 is provided using any combination of one or more of a suitable central processing unit CPU, multiprocessor, microcontroller, digital signal processor DSP, etc., capable of executing software instructions stored in a computer program product, e.g., in the form of a storage medium 930. The processing circuitry 910 may further be provided as at least one application specific integrated circuit ASIC, or field programmable gate array FPGA. Particularly, the processing circuitry 910 is configured to cause the control unit 900 to perform a set of operations, or steps, such as the methods discussed in connection to Figure 8 and generally herein. For example, the storage medium 930 may store the set of operations, and the processing circuitry 910 may be configured to retrieve the set of operations from the storage medium 930 to cause the control unit 900 to perform the set of operations. The set of operations may be provided as a set of executable instructions. Thus, the processing circuitry 910 is thereby arranged to execute methods as herein disclosed.

The storage medium 930 may also comprise persistent storage, which, for example, can be any single one or combination of magnetic memory, optical memory, solid state memory or even remotely mounted memory.

The control unit 900 may further comprise an interface 920 for communications with at least one external device. As such the interface 920 may comprise one or more transmitters and receivers, comprising analogue and digital components and a suitable number of ports for wireline or wireless communication.

The processing circuitry 910 controls the general operation of the control unit 900, e.g., by sending data and control signals to the interface 920 and the storage medium 930, by receiving data and reports from the interface 920, and by retrieving data and instructions from the storage medium 930. Other components, as well as the related functionality, of the control node are omitted in order not to obscure the concepts presented herein.

Figure 10 illustrates a computer readable medium 1010 carrying a computer program comprising program code means 1020 for performing the methods illustrated in Figure 8 and the techniques discussed herein, when said program product is run on a computer. The computer readable medium and the code means may together form a computer program product 1000.

## Claims

1. A wheel end module for a heavy-duty vehicle (100), the wheel end module being a highly integrated device mounted close to a wheel of the heavy-duty vehicle, in order to determine wheel slip of said wheel in a stand-alone manner without relying on any external systems, comprising a radar module (110) and a wheel speed sensor (350). wherein:
the radar module (110) is configured to determine a two-dimensional velocity vector (vx, vy) of the heavy-duty vehicle (100) with respect to a ground plane (101) supporting the vehicle (100), the radar module (110) comprising:
a radar transceiver arranged to transmit and to receive a radar signal (115), via an antenna array (400, 450), wherein the antenna array (400, 450) is configured to emit the radar signal (115) in a first azimuth direction (d1) and in a second azimuth direction (d2) different from the first azimuth direction, wherein the first direction (d1) and the second direction (d2) are configured on respective sides of a bore sight direction (405) of the radar module (110), with the bore sight direction of the radar module arranged to be aligned with a longitudinal direction of the vehicle (100),
a processing device (440) arranged to detect first and second radar signal components (420, 430) of the received radar signal (115) based on their respective angle of arrival, AoA, where the first radar signal component (420) has an AoA corresponding to the first azimuth direction (d1) and the second radar signal component (430) has an AoA corresponding to the second azimuth direction (d2), wherein the processing device (440) is arranged to determine the two-dimensional velocity vector (vx, vy) of the heavy-duty vehicle (100) based on respective Doppler frequencies of the first and second radar signal components (420, 430), wherein the processing device (440) is arranged to detect a lateral velocity component (vy) of the vehicle (100) based on a difference (D) of the respective Doppler frequencies of the first and second radar signal components (420, 430); and
the wheel speed sensor (350) is arranged to determine a rotational velocity (*ωₓ*) of a wheel (310) on the heavy-duty vehicle (100), wherein the processing device (440) is arranged to determine a wheel slip (λ) and/or a slip angle (α) of the wheel (310) based on the rotational velocity (*ωₓ*) of the wheel (310) and on the two-dimensional velocity vector (vx, vy) of the heavy-duty vehicle (100).

2. The wheel end module according to any previous claim, wherein the antenna array (400) comprises a plurality of antenna elements (410) arranged on a line.

3. The wheel end module according to any previous claim, wherein the antenna array (450) comprises a plurality of antenna elements (410) arranged on a two-dimensional grid.

4. The wheel end module according to any previous claim, wherein the processing device (440) is arranged to detect the first and second radar signal components (420, 430) over respective distances exceeding a distance from the antenna array (400, 450) to the ground plane (101).

5. The wheel end module according to any previous claim, wherein the processing device (440) is arranged to adjust a setting of the antenna array (400, 450) based on a pre-determined target AoA of the first and second radar signal components.

6. The wheel end module according to any previous claim, wherein the processing device (440) is arranged to obtain data associated with a steering angle of a wheel (310) of the heavy-duty vehicle (100), and to transform the two-dimensional velocity vector (vx, vy) of the heavy-duty vehicle (100) into a coordinate system of the wheel (310) based on the data associated with the steering angle of the wheel (310).

7. The wheel end module according to any previous claim, comprising a control unit for controlling an electric machine (340), wherein the processing device (440) is arranged to control an axle speed of the electric machine (340) based on a target wheel slip (λ).

8. The wheel end module according to any previous claim, comprising an inertial measurement unit, IMU, wherein the processing device (440) is arranged to output one or more acceleration values to a central vehicle motion management, VMM.

9. A heavy-duty vehicle (100) comprising a wheel end module according to any previous claim.

10. A computer implemented method for determining a two-dimensional velocity vector (vx, vy) of a heavy-duty vehicle (100) with respect to a ground plane (101) supporting the vehicle (100) by means of a wheel end module, being a highly integrated device mounted close to a wheel of the heavy-duty vehicle, in order to determine wheel slip of said wheel in a stand-alone manner without relying on any external systems, comprising a radar module (110) and a wheel speed sensor (350), the method comprising arranging (S1) a radar transceiver of the radar module (110) to transmit and to receive a radar signal (115), via an antenna array (400, 450),
configuring (S2) the antenna array (400, 450) to emit the radar signal (115) in a first azimuth direction (d1) and in a second azimuth direction (d2) different from the first azimuth direction, wherein the first direction (d1) and the second direction (d2) are configured on respective sides of a bore sight direction (405) of the radar module (110), with the bore sight direction of the radar module arranged to be aligned with a longitudinal direction of the vehicle (100), detecting (S3) first and second radar signal components (420, 430) of the received radar signal (115), by a processing device (440), based on their respective angle of arrival, AoA, where the first radar signal component (420) has an AoA corresponding to the first azimuth direction (d1) and the second radar signal component (430) has an AoA corresponding to the second azimuth direction (d2),
determining (S4) the two-dimensional velocity vector (vx, vy) of the heavy-duty vehicle (100) based on respective Doppler frequencies of the first and second radar signal components (420, 430), wherein the processing device (440) is arranged to detect a lateral velocity component (vy) of the vehicle (100) based on a difference (D) of the respective Doppler frequencies of the first and second radar signal components (420, 430),
determining, by the wheel speed sensor (350), a rotational velocity (*ωₓ*) of a wheel (310) on the heavy-duty vehicle (100), and
determining, by the processing device (440), a wheel slip (λ) and/or a slip angle (α) of the wheel (310) based on the rotational velocity (*ωₓ*) of the wheel (310) and on the two-dimensional velocity vector (vx, vy) of the heavy-duty vehicle (100).

11. A computer program (920) comprising program code means for performing the steps of claim 10 when the program is run on the processing device (440) of the wheel end module of any of claims 1-9.

## Patentansprüche

1. Ein Radendmodul für ein Schwerlastfahrzeug (100), wobei das Radendmodul eine hochintegrierte Vorrichtung ist, die nahe an einem Rad des Schwerlastfahrzeugs montiert ist, um den Radschlupf des genannten Rades eigenständig zu bestimmen, ohne auf externe Systeme angewiesen zu sein,
umfassend ein Radarmodul (110) und einen Raddrehzahlsensor (350)
wobei:
das Radarmodul (110) dazu ausgelegt ist, einen zweidimensionalen Geschwindigkeitsvektor (vx, vy) des Schwerlastfahrzeugs (100) in Bezug auf eine Bodenebene (101), die das Fahrzeug (100) trägt, zu bestimmen, wobei das Radarmodul (110) umfasst:
einen Radar-Sendeempfänger, der dazu angeordnet ist, ein Radarsignal (115) über eine Antennenanordnung (400, 450) zu senden und zu empfangen, wobei die Antennenanordnung (400, 450) dazu ausgelegt ist, das Radarsignal (115) in einer ersten Azimutrichtung (d1) und in einer zweiten Azimutrichtung (d2), die von der ersten Azimutrichtung verschieden ist, auszusenden, wobei die erste Richtung (d1) und die zweite Richtung (d2) auf jeweiligen Seiten einer Hauptstrahlrichtung (405) des Radarmoduls (110) angeordnet sind, wobei die Hauptstrahlrichtung des Radarmoduls dazu angeordnet ist, mit einer Längsrichtung des Fahrzeugs (100) ausgerichtet zu sein,
eine Verarbeitungsvorrichtung (440), die dazu angeordnet ist, erste und zweite Radarsignalkomponenten (420, 430) des empfangenen Radarsignals (115) auf Grundlage ihrer jeweiligen Einfallswinkel, AoA, zu detektieren, wobei die erste Radarsignalkomponente (420) einen AoA aufweist, der der ersten Azimutrichtung (d1) entspricht, und die zweite Radarsignalkomponente (430) einen AoA aufweist, der der zweiten Azimutrichtung (d2) entspricht, wobei die Verarbeitungsvorrichtung (440) dazu angeordnet ist, zu bestimmen den zweidimensionalen Geschwindigkeitsvektor (vx, vy) des Schwerlastfahrzeugs (100) auf Grundlage jeweiliger Dopplerfrequenzen der ersten und zweiten Radarsignalkomponenten (420, 430), wobei die Verarbeitungsvorrichtung (440) dazu angeordnet ist, zu detektieren eine seitliche Geschwindigkeitskomponente (vy) des Fahrzeugs (100) auf Grundlage einer Differenz (D) der jeweiligen Dopplerfrequenzen der ersten und zweiten Radarsignalkomponenten (420, 430); und
der Raddrehzahlsensor (350) dazu eingerichtet ist, eine Drehgeschwindigkeit (ωₓ) eines Rades (310) an dem Schwerlastfahrzeug (100) zu bestimmen, wobei die Verarbeitungsvorrichtung (440) dazu eingerichtet ist, einen Radschlupf (λ) und/oder einen Schräglauf winkel (α) des Rades (310) auf der Grundlage der Drehgeschwindigkeit (ωₓ) des Rades (310) und des zweidimensionalen Geschwindigkeitsvektors (vx, vy) des Schwerlastfahrzeugs (100) zu bestimmen.

2. Das Radendmodul nach einem beliebigen vorhergehenden Anspruch, wobei die Antennenanordnung (400) eine Vielzahl von Antennenelementen (410) umfasst, die angeordnet sind auf einer Linie.

3. Das Radendmodul nach einem beliebigen vorhergehenden Anspruch, wobei die Antennenanordnung (450) eine Vielzahl von Antennenelementen (410) umfasst, die angeordnet sind auf einem zweidimensionalen Gitter.

4. Das Radendmodul nach einem beliebigen vorhergehenden Anspruch, wobei die Verarbeitungsvorrichtung (440) dazu eingerichtet ist, die ersten und zweiten Radarsignalkomponenten (420, 430) über jeweilige Entfernungen zu detektieren, die eine Entfernung von der Antennenanordnung (400, 450) zu der Grundebene (101) überschreiten.

5. Das Radendmodul nach einem beliebigen vorhergehenden Anspruch, wobei die Verarbeitungsvorrichtung (440) dazu eingerichtet ist, eine Einstellung der Antennenanordnung (400, 450) auf der Grundlage eines vorbestimmten Ziel-AoA der ersten und zweiten Radarsignalkomponenten anzupassen.

6. Das Radendmodul nach einem beliebigen vorhergehenden Anspruch, wobei die Verarbeitungsvorrichtung (440) dazu eingerichtet ist, Daten zu erhalten, die mit einem Lenkwinkel eines Rades (310) des Schwerlastfahrzeugs (100) assoziiert sind, und den zweidimensionalen Geschwindigkeitsvektor (vx, vy) des Schwerlastfahrzeugs (100) in ein Koordinatensystem des Rades (310) auf der Grundlage der Daten zu transformieren, die mit dem Lenkwinkel des Rades (310) assoziiert sind.

7. Das Radendmodul nach einem der vorhergehenden Ansprüche, umfassend eine Steuereinheit zum Steuern einer elektrischen Maschine (340), wobei die Verarbeitungsvorrichtung (440) dazu angeordnet ist, eine Achsdrehzahl der elektrischen Maschine (340) auf Grundlage eines Zielradschlupfs (λ) zu steuern.

8. Das Radendmodul nach einem der vorhergehenden Ansprüche, umfassend eine Trägheitsmesseinheit, IMU, wobei die Verarbeitungsvorrichtung (440) dazu angeordnet ist, einen oder mehrere Beschleunigungswerte an eine zentrale Fahrzeugbewegungsverwaltung, VMM, auszugeben.

9. Ein Schwerlastfahrzeug (100), umfassend ein Radendmodul nach einem der vorhergehenden Ansprüche.

10. Ein computerimplementiertes Verfahren zum Bestimmen eines zweidimensionalen Geschwindigkeitsvektors (vx, vy) eines Schwerlastfahrzeugs (100) in Bezug auf eine Boden ebene (101), die das Fahrzeug (100) trägt, mittels eines Radendmoduls, das eine hochintegrierte Vorrichtung ist, die nahe einem Rad des Schwerlastfahrzeugs montiert ist, um den Radschlupf des genannten Rades eigenständig zu bestimmen, ohne sich auf irgendwelche externen Systeme zu stützen, umfassend ein Radarmodul (110) und einen Raddrehzahlsensor (350),
wobei das Verfahren umfasst
Anordnen (S1) eines Radarsendeempfängers des Radarmoduls (110) zum Senden und Empfangen eines Radarsignals (115) über eine Antennenanordnung (400, 450),
Konfigurieren (S2) der Antennenanordnung (400, 450), um das Radarsignal (115) in einer ersten Azimutrichtung (d1) und in einer zweiten Azimutrichtung (d2), die verschieden von der ersten Azimutrichtung ist, auszustrahlen, wobei die erste Richtung (d1) und die zweite Richtung (d2) auf jeweiligen Seiten einer Blickrichtung (405) des Radarmoduls (110) konfiguriert sind, wobei die Blickrichtung des Radarmoduls dazu angeordnet ist, mit einer Längsrichtung des Fahrzeugs (100) ausgerichtet zu sein,
Detektieren (S3) erster und zweiter Radarsignalkomponenten (420, 430) des empfangenen Radarsignals (115) durch eine Verarbeitungsvorrichtung(440), auf Grundlage ihrer jeweiligen Einfallswinkel, AoA, wobei die erste Radarsignalkomponente (420) eine AoA aufweist, die der ersten Azimutrichtung (d1) und der zweiten Radarsignalkomponente (430) eine AoA aufweist, die der zweiten Azimutrichtung (d2) entspricht,
Bestimmen (S4) des zweidimensionalen Geschwindigkeitsvektors (vx, vy) des Schwerlastfahrzeugs (100) auf der Grundlage jeweiliger Dopplerfrequenzen der ersten und zweiten Radarsignalkomponenten (420, 430), wobei die Verarbeitungsvorrichtung (440) dazu eingerichtet ist, eine Quergeschwindigkeitskomponente (vy) des Fahrzeugs (100) auf der Grundlage einer Differenz (D) der jeweiligen Dopplerfrequenzen der ersten und zweiten Radarsignalkomponenten (420, 430) zu detektieren,
Bestimmen, durch den Raddrehzahlsensor (350), einer Drehgeschwindigkeit (ωₓ) eines Rades (310) an dem Schwerlastfahrzeug (100), und
Bestimmen, durch die Verarbeitungsvorrichtung (440), eines Radschlupfs (λ) und/oder eines Schräglaufwinkels (α) des Rades (310) auf der Grundlage der Drehgeschwindigkeit (ωₓ) des Rades (310) und auf der Grundlage des zweidimensionalen Geschwindigkeitsvektors (vx, vy) des Schwerlastfahrzeugs (100).

11. Ein Computerprogramm (920), umfassend Programmcodemittel zum Durchführen der Schritte nach Anspruch 10, wenn das Programm auf der Verarbeitungsvorrichtung (440) des Radendmoduls nach einem der Ansprüche 1-9 ausgeführt wird.

## Revendications

1. Un module d'extrémité de roue pour un véhicule lourd (100), le module d'extrémité de roue étant un dispositif hautement intégré monté à proximité d'une roue du véhicule lourd, afin de déterminer le patinage de roue de ladite roue de manière autonome sans s'appuyer sur des systèmes externes quelconques,
comprenant un module radar (110) et un capteur de vitesse de roue (350)
dans lequel :
le module radar (110) est configuré pour déterminer un vecteur vitesse bidimensionnel (vx, vy) du véhicule lourd (100) par rapport à un plan de sol (101) supportant le véhicule (100), le module radar (110) comprenant :
un émetteur-récepteur radar agencé pour transmettre et recevoir un signal radar (115), via un réseau d'antennes (400, 450), dans lequel le réseau d'antennes (400, 450) est configuré pour émettre le signal radar (115) dans une première direction azimutale (d1) et dans une seconde direction azimutale (d2) différente de la première direction azimutale, dans lequel la première direction (d1) et la seconde direction (d2) sont configurées de part et d'autre respectivement d'une direction de visée (405) du module radar (110), avec la direction de visée du module radar agencée pour être alignée avec une direction longitudinale du véhicule (100),
un dispositif de traitement (440) agencé pour détecter des premier et second signaux radar composants (420, 430) du signal radar reçu (115) sur la base de leur angle d'arrivée respectif, AoA, où le premier composant de signal radar (420) a un AoA correspondant à la première direction azimutale (d1) et le second composant de signal radar (430) a un AoA correspondant à la seconde direction azimutale (d2), dans lequel le dispositif de traitement (440) est agencé pour déterminer le vecteur vitesse bidimensionnel (vx, vy) du véhicule lourd (100) sur la base des fréquences Doppler respectives des premier et second signaux radar composants (420, 430), dans lequel le dispositif de traitement (440) est agencé pour détecter une composante de vitesse latérale (vy) du véhicule (100) sur la base d'une différence (D) des fréquences Doppler respectives des premier et second composants de signal radar (420, 430); et
le capteur de vitesse de roue (350) est configuré pour déterminer une vitesse de rotation (ωₓ) d'une roue (310) sur le véhicule lourd (100), dans lequel le dispositif de traitement (440) est configuré pour déterminer un glissement de roue (λ) et/ou un angle de dérive (α) de la roue (310) sur la base de la vitesse de rotation (ωₓ) de la roue (310) et du vecteur de vitesse bidimensionnel (vx, vy) du véhicule lourd (100).

2. Le module d'extrémité de roue selon une quelconque revendication précédente, dans lequel le réseau d'antennes (400) comprend une pluralité d'éléments d'antenne (410) disposés sur une ligne.

3. Le module d'extrémité de roue selon une quelconque revendication précédente, dans lequel le réseau d'antennes (450) comprend une pluralité d'éléments d'antenne (410) disposés sur une grille bidimensionnelle.

4. Le module d'extrémité de roue selon une quelconque revendication précédente, dans lequel le dispositif de traitement (440) est configuré pour détecter les première et seconde composantes de signal radar (420, 430) sur des distances respectives dépassant une distance entre le réseau d'antennes (400, 450) et le plan de sol (101).

5. Le module d'extrémité de roue selon une quelconque revendication précédente, dans lequel le dispositif de traitement (440) est configuré pour ajuster un réglage du réseau d'antennes (400, 450) sur la base d'un AoA cible prédéterminé des première et seconde composantes de signal radar.

6. Le module d'extrémité de roue selon une quelconque revendication précédente, dans lequel le dispositif de traitement (440) est configuré pour obtenir des données associées à un angle de braquage d'une roue (310) du véhicule lourd (100), et pour transformer le vecteur de vitesse bidimensionnel (vx, vy) du véhicule lourd (100) en un système de coordonnées de la roue (310) sur la base des données associées à l' angle de braquage de la roue (310).

7. Le module d'extrémité de roue selon l'une quelconque revendication précédente, comprenant une unité de commande destinée à commander une machine électrique (340), dans lequel le dispositif de traitement (440) est agencé pour commander une vitesse d'essieu de la machine électrique (340) sur la base d'un glissement de roue cible (λ).

8. Le module d'extrémité de roue selon l'une quelconque revendication précédente, comprenant une unité de mesure inertielle, IMU, dans lequel le dispositif de traitement (440) est agencé pour délivrer une ou plusieurs valeurs d'accélération à une gestion centralisée du mouvement du véhicule, VMM.

9. Un véhicule lourd (100) comprenant un module d'extrémité de roue selon l'une quelconque des revendications précédentes.

10. Un procédé mis en œuvre par ordinateur pour déterminer un vecteur de vitesse bidimensionnel (vx, vy) d'un véhicule lourd (100) par rapport à un plan de sol (101) supportant le véhicule (100) au moyen d'un module d'extrémité de roue, étant un dispositif fortement intégré monté à proximité d'une roue du véhicule lourd, afin de déterminer le glissement de roue de ladite roue de manière autonome sans s'appuyer sur des systèmes externes, comprenant un module radar (110) et un capteur de vitesse de roue (350),
le procédé comprenant l'agencement (S1) d'un émetteur-récepteur radar du module radar (110) pour émettre et recevoir un signal radar (115), par l'intermédiaire d'un réseau d'antennes (400, 450),
la configuration (S2) du réseau d'antennes (400, 450) pour émettre le signal radar(115) dans une première direction azimutale (d1) et dans une seconde direction azimutale (d2) différente de la première direction azimutale, dans lequel la première direction (d1) et la seconde direction (d2) sont configurées de part et d'autre respectivement d'une direction d'axe de visée (405) du module radar (110), la direction d'axe de visée du module radar étant agencée pour être alignée avec une direction longitudinale du véhicule (100),
la détection (S3) de première et seconde composantes de signal radar (420, 430) du signal radar reçu (115), par un dispositif de traitement (440), sur la base de leurs angles d'arrivée respectifs, AoA, où la première composante de signal radar (420) possède un AoA correspondant à la première direction azimutale (d1) et le second composant de signal radar (430) possède un AoA correspondant à la seconde direction azimutale (d2),
la détermination (S4) du vecteur de vitesse bidimensionnel (vx, vy) du véhicule lourd (100) sur la base des fréquences Doppler respectives des premier et second composants de signal radar (420, 430), dans lequel le dispositif de traitement (440) est agencé pour détecter une composante de vitesse latérale (vy) du véhicule (100) sur la base d'une différence (D) des fréquences Doppler respectives des premier et second signaux radar composants (420,430),
la détermination, par le capteur de vitesse de roue (350), d'une vitesse de rotation (ωₓ) d'une roue (310) sur le véhicule lourd (100), et
la détermination, par le dispositif de traitement (440), d'un glissement de roue (λ) et/ou d'un angle de glissement (α) de la roue (310) sur la base de la vitesse de rotation (ωₓ) de la roue (310) et du vecteur de vitesse bidimensionnel (vx, vy) du véhicule lourd (100).

11. Un programme informatique (920) comprenant des moyens de code de programme pour exécuter les étapes de la revendication 10 lorsque le programme est exécuté sur le dispositif de traitement (440) du module d'extrémité de roue selon l'une quelconque des revendications 1 à 9.
